# EUROPÄISCHE PATENTSCHRIFT

(11) **EP 2 190 706 B1**
(45) Veröffentlichungstag und Bekanntmachung des Hinweises auf die Patenterteilung: **29.06.2011**
(21) Anmeldenummer: 08785280.2
(22) Anmeldetag: 01.08.2008
(51) Int. Cl.: B60T 13/68, B60T 15/02

(54) **VENTILANORDNUNG ZUR STEUERUNG EINER BREMSANLAGE EINES ANHÄNGERFAHRZEUGS**
VALVE ARRANGEMENT FOR CONTROLLING A BRAKE SYSTEM OF A TRAILER VEHICLE
ENSEMBLE DE VANNE DESTINÉ À COMMANDER L'INSTALLATION DE FREINAGE D'UN VÉHICULE TRACTÉ

(30) Priorität: 14.08.2007 DE 102007038472
(43) Veröffentlichungstag der Anmeldung: 02.06.2010
(73) Patentinhaber: KNORR-BREMSE Systeme für Nutzfahrzeuge GmbH, 80809 München (DE)
(72) Erfinder: MEDERER, Martin, 80797 München (DE)
(74) Vertreter: Schönmann, Kurt
(86) Internationale Anmeldenummer: PCT/EP2008/006339
(87) Internationale Veröffentlichungsnummer: WO 2009/021642

(56) Entgegenhaltungen:
- EP-A- 1 188 634
- DE-A1- 2 810 850
- DE-A1- 2 923 359

## Beschreibung

### Stand der Technik

Die Erfindung geht aus von einer Ventilanordnung zur Steuerung einer wenigstens einen Federspeicherbremszylinder sowie wenigstens einen Betriebsbremszylinder beinhaltenden Bremsanlage eines Anhängerfahrzeugs für eine Zugfahrzeug-Anhängerkombination, gemäß Oberbegriff des Anspruchs 1, siehe z.B. EP-1188634-A.

In modernen Anhängerfahrzeugen von Zugfahrzeug-Anhängerkombinationen werden üblicherweise sog. Kombizylinder als Bremszylinder verwendet, welche einerseits einen Betriebsbremszylinder als aktive Betriebsbremse beinhalten, welcher zum Bremszuspannen belüftet und zum Bremslösen entlüftet wird, und andererseits einen Federspeicherbremszylinder als passive Parkbremse, welcher zum Bremszuspannen entlüftet und zum Bremslösen belüftet wird.

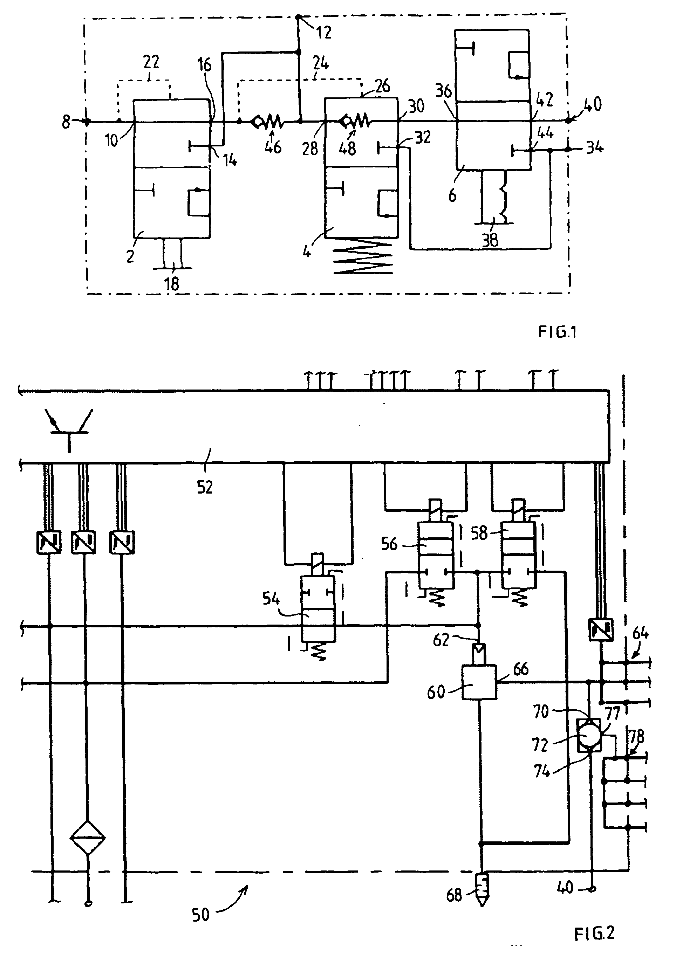

In Fig.1 ist eine Park-/Shunt-Ventilanordnung 1 des Stands der Technik gezeigt, welche in einem Anhängerfahrzeug einer Zugfahrzeug-Anhängerkombination einerseits dazu dient, beim Parken bei am Kupplungskopf noch angekuppeltem Anhänger die Federspeicherbremszylinder zu entlüften, damit die Federspeicherbremse zuspannt ("Parking-Funktion"). Andererseits fordert der Gesetzgeber, dass bei einem Abriss der Druckluftversorgung des Anhängerfahrzeugs die Federspeicherbremse automatisch zuspannt ("Abriss-Funktion"). Diese Funktion ist ebenfalls in die bekannte Park-/Shunt-Ventilanordnung 1 integriert. Nicht zuletzt muss die Abriss-Funktion außer Betrieb gesetzt werden können, wenn der Anhänger in abgekuppeltem Zustand von einem Fahrzeug ohne Druckluftversorgung rangiert werden soll. Diese "Shunting"-Funktion wird beim Stand der Technik ebenfalls von der Park-/Shunt-Ventilanordnung 1 ausgeführt.

Gemäß des in Fig.1 gezeigten Schaltbilds der Park-/Shunt-Ventilanordnung 1 des Stands der Technik umfasst diese ein der Shunting-Funktion zugeordnetes Shunting-Ventil 2, ein der Abriss-Funktion zugeordnetes Abriss-Ventil 4 sowie ein der Parking-Funktion zugeordnetes Parking-Ventil 6.

Das Shunting-Ventil 2 ist ein 3/2-Wegeventil, welches in eine erste Schaltstellung, in welcher ein mit einem Kupplungsanschluss 8 an den Kupplungskopf "Vorrat" des Anhängerfahrzeugs in Verbindung stehender Eingang 10 gesperrt und ein mit einem Vorratsanschluss 12 an einen anhängerfahrzeugseitigen Druckluftvorratsbehälter in Verbindung stehender Eingang 14 mit einem Ausgang 16 in Verbindung steht, über einen Schalter 18 betätigbar ist, und welches in eine zweite Schaltstellung, in welcher der mit dem Kupplungsanschluss 8 in Verbindung stehende Eingang 10 auf den Ausgang 16 durchgeschaltet ist, durch den an einem Steuereingang 20 anstehenden, über eine Steuerleitung 22 vom Kupplungsanschluss 8 herangeführten Vorratsdruck pneumatisch schaltbar ist. Eine Betätigen des Shunting-Ventils 2 durch den Schalter 18 in die erste Schaltstellung ist jedoch nur möglich, wenn der Druck am Steuereingang 20 kleiner als ein vorgegebener Grenzdruck, z.B. kleiner als der Vorratsdruck am Kupplungsanschluss 8 ist.

Der Ausgang 16 des Shunting-Ventils 2 steht über eine Steuerleitung 24 mit einem Steuereingang 26 des als einerseits steuerdruckbetätigten, andererseits federbetätigten, ebenfalls als 3/2-Wegeventil ausgebildeten Abriss-Ventils 4 sowie mit einem Eingang 28 dieses Ventils 4 in Verbindung. In seiner ersten, federbetätigten Schaltstellung sperrt das Abriss-Ventil 4 den Eingang 28 ab und verbindet seinen Ausgang 30 mit einem weiteren Ausgang 32, der an einen Entlüftungsanschluss 34 angeschlossen ist. In seiner zweiten, druckbetätigten Schaltstellung schaltet es seinen Eingang 28 auf den Ausgang 30 durch und sperrt den mit dem Entlüftungsanschluss 34 in Verbindung stehenden weiteren Ausgang 32 ab. Solange ein ausreichender Steuerdruck an seinem Steuereingang 26 ansteht, kann die erste federbetätigte Schaltstellung nicht eingenommen werden.

Ein Eingang 36 des ebenfalls als 3/2-Wegeventil ausgebildeten Parking-Ventils 6 steht mit dem einen Ausgang 30 des Abriss-Ventils 4 in Verbindung. Das Parking-Ventil 6 ist rein mechanisch betätigt, wobei bei Betätigung eines Schalters 38 gemäß einer ersten Schaltstellung der Eingang 36 gesperrt und ein mit einem Wechselventilanschluss 40 verbundener Ausgang 42 mit einem weiteren Ausgang 44 in Verbindung gebracht wird, welcher mit dem Entlüftungsanschluss 34 verbunden ist. Gemäß einer zweiten, in Fig.1 gezeigten Schaltstellung ist hingegen der Eingang 36 mit dem Ausgang 42 verbunden, der zum Wechselventilanschluss 40 führt, welcher mit den Federspeicherbremszylindern des Anhängerfahrzeugs in Verbindung steht. Die ersten und zweiten Schaltstellungen des Parking-Ventils 6 sind feststell- oder verrarstbar.

Zwei Rückschlagventile 46, 48 zwischen dem Ausgang 16 des Shunting-Ventils 2 und dem Eingang 28 des Abriss-Ventils 4 bzw. diesem Eingang 28 und dem einen Ausgang 30 des Abriss-Ventils 4 sorgen dafür, dass Druckluft nur in der jeweils zugelassenen Richtung strömen kann.

In Fig.2 ist ein Ausschnitt eines Schaltplans eines bekannten, dem Anhänger zugeordneten Druckregelmoduls 50 dargestellt, welcher mit der Park-/Shunt-Ventilanordnung 1 von Fig.1 zusammenwirkt. Das Druckregelmodul 50 beinhaltet in bekannte Weise von einer elektronischen Steuereinrichtung 52 gesteuert ein Backup-Ventil 54, ein Einlassventil 56 sowie ein Auslassventil 58, welche ein Relaisventil 60 ansteuern, das abhängig von einem an seinem Steuereingang 62 anstehenden Steuerdruck einen Bremsdruck an seinen mit Betriebsbremsanschlüssen 64 für die Betriebsbremszylinder in Verbindung stehenden Ausgang 66 aussteuert bzw. diese Anschlüsse 64 mit einem Entlüftungsanschluss 68 verbindet. Der Ausgang 66 des Relaisventils 60 ist weiterhin an einen Eingang 70 eines Wechselventils 72 angeschlossen, dessen weiterer Eingang 74 mit dem Wechselventilanschluss 40 der Park-/Shunt-Ventilanordnung 1 von Fig.1 in Verbindung steht. Das Wechselventil 72 steuert von den an seinen beiden Eingängen 70, 74 anstehenden Drücken, dem vom Relaisventil 60 ausgesteuerten Betriebsbremsdruck einerseits und dem am Wechselventilanschluss 40 anstehenden Vorratsdruck andererseits den größeren Druck an seinen Ausgang 77 durch, welcher mit Federspeicheranschlüssen 78 in Verbindung steht, welche zu den Federspeicherbremszylindern führen. Das Wechselventil 72 dient dazu, eine Überlastung der Bauteile der Federspeicherbremszylinder durch eine Überlagerung des Betriebsbremsdrucks mit dem Vorratsdruck zu verhindern (Kraftbegrenzung).

Bei angekuppeltem Anhängerfahrzeug im Fahrbetrieb gelangt vom Wechselventilanschluss 40 der Park-/Shunt-Venfilanordnung 1 von Fig.1 her über den Kupplungskopf "Vorrat" eingeleiteter Vorratsdruck an den einen Eingang 74 des Wechselventils 72, während der andere Eingang 70 beim Betriebsbremsen mit dem Betriebsbremsdruck des Relaisventils 60 beaufschlagt wird, welcher in der Regel vom Vorratsdruck abgeleitet und daher kleiner als dieser ist. Daher wird im Regelfall der an dem einen Eingang 74 des Wechselventils 72 anstehende Vorratsdruck an die Federspeicheranschlüsse 78 durchgesteuert, um die Federspeicherbremsen im Fahrbetrieb gelöst zu halten.

Vor diesem Hintergrund ist die Funktionsweise wie folgt: Im Betrieb, d.h. bei fahrender Zugfahrzeug-Anhängerkombination befinden sich die Ventile 2, 4, und 6 in den in Fig.1 gezeigten Durchschaltstellungen, in welchen der am Kupplungsanschluss 8 anstehende, vom Zugfahrzeug herangeführte Vorratsdruck durch die Ventile 2, 4 und 6 hindurch bis zum Wechselventilanschluss 40 gesteuert wird. Dabei steht am Steuereingang 26 des Abriss-Ventils 4 Vorratsdruck und damit genügend Steuerdruck an, um es gegen die Wirkung der Ventilfeder in der zweiten Schaltstellung zu halten, in welcher sein Eingang 28 auf den Ausgang 30 durchgeschaltet ist. Da der Vorratsdruck in der Regel größer als der Betriebbremsdruck ist, welcher von ersterem abgeleitet wird, setzt sich am Wechselventil 72 der Vorratsdruck gegenüber dem Betriebsbremsdruck durch und belüftet die Federspeicherbremszylinder, um die Federspeicherbremsen gelöst zu halten.

Nachdem die Zugfahrzeug-Anhängerkombination zum Abstellen mit der aktiven Betriebsbremse abgebremst worden ist, kann die Parkbremse bei noch an das Zugfahrzeug angekuppeltem Anhänger zugespannt werden ("Parking-Funktion"). Dazu betätigt der Fahrzeugführer den Schalter 38 und führt das Parking-Ventil 6 von der in Fig.1 gezeigten zweiten Schaltstellung in die erste Schaltstellung über, in welcher es den Wechselventilanschluss 40 mit dem Entlüftungsanschluss 34 verbindet, während sein Eingang 36 abgesperrt wird. Somit strömt Druckluft von den Federspeicherbremszylindern über die Federspeicheranschlüsse 78, das Wechselventil 72, den Wechselventilanschluss 40 und den Entlüftungsanschluss 34 in Freie, wodurch die Federspeicherbremszylinder entlüftet werden und die Federspeicherbremsen zum Parken zuspannen. Gleichzeitig verhindert der abgesperrte Eingang 36, dass der am Kupplungsanschluss 8 anstehende Vorratsdruck ausströmen kann.

Wird hingegen das durch die Betriebsbremse in den Stillstand eingebremste Anhängerfahrzeug ohne Betätigung des Parking-Ventils 6 vom Zugfahrzeug abgekuppelt, sinkt der Druck am Kupplungsanschluss 8 wie auch am Steueranschluss 26 des Abriss-Ventils 4 rapide ab, wodurch dieses federbetätigt von der in Fig.1 gezeigten zweiten Schaltstellung in die erste Schaltstellung umschaltet, in welcher sein über das Parking-Ventil 6 auf den Wechselventilanschluss 40 durchgeschalteter Ausgang 30 mit dem Entlüftungsanschluss 34 in Verbindung gebracht wird, wodurch die Federspeicherbremszylinder automatisch entlüftet und die Federspeicherbremsen zugespannt werden. Hingegen wird der Eingang 28 des Abriss-Ventils 4 abgesperrt, so dass keine Druckluft vom Vorratsanschluss 12 her ausströmen kann. Die beschriebene Folge tritt auch dann ein, wenn es zu einem Abriss der Schlauchverbindung oder zu einer Leckage in der Schlauchverbindung zwischen dem Kupplungskopf "Vorrat" des Zugfahrzeugs und dem Kupplungskopf "Vorrat" des Anhängers kommt, weil dann auch der Druck am Kupplungsanschluss 8 rapide sinkt (Abriss-Funktion).

Falls daher eine Leckage oder ein Abriss in der Schlauchverbindung zwischen dem Zugfahrzeug und dem Anhänger auftritt, sinkt der Druck am Kupplungskopf "Vorrat", am Kupplungsanschluss 8 wie auch am Steueranschluss 26 des Abriss-Ventils 4 rapide ab, wodurch dieses federbetätigt von der in Fig.1 gezeigten zweiten Schaltstellung in die erste Schaltstellung umschaltet, in welcher sein auf den Wechselventilanschluss 40 durchgeschalteter Ausgang 30 mit dem Entlüftungsanschluss 34 in Verbindung gebracht wird, so dass auch der Druck am Wechselventilanschluss 40 und somit auch am Eingang 74 des Wechselventils 72 sinkt.

Falls der Fahrer nicht mit der Betriebsbremse bremst, so ist auch der Druck am anderen Eingang 70 des Wechselventils niedrig, so dass der insgesamt niedrige Druck am Ausgang 76 des Wechselventils zu einem automatischen Zuspannen der Federspeicherzylinder führt. Falls der Fahrer jedoch bremst, so schaltet das Wechselventil 72 den nun größeren Bremsdruck an seinen Ausgang 76 durch und leitet ihn zu den Federspeicherbremszylindern, weshalb die Federspeicherbremse gelöst ist. Gleichzeitig steht der Betriebsbremsdruck jedoch auch an den Betriebsbremsanschlüssen 64 an, wodurch die Betriebsbremse zuspannt, so dass die Forderung nach einer Einbremsung des Anhängerfahrzeugs nach einer Leckage bzw. einem Schlauchabriss erfüllt ist. Ist der Bremsdruck niedrig genug, dass die Federspeicherbremsen zuspannen können, so setzt sich die Bremskraft aus der Bremskraft der Betriebsbremse und der Bremskraft der Federspeicherbremse zusammen, womit wiederum die Bedingung der Einbremsung des Anhängerfahrzeugs bei Leckage oder Schlauchabriss erfüllt ist.

Wenn es wünschenswert ist, das abgestellte und über die Federspeicherbremsen eingebremste Anhängerfahrzeug durch ein Fahrzeug ohne Druckluftversorgung, beispielsweise durch einen Gabelstapler zu verfahren bzw. zu rangieren (Shunting-Funktion), muss die Federspeicherbremse gelöst werden. Dazu betätigt eine Bedienperson den Schalter 18 des Shunting-Ventils 2, wodurch der mit dem anhängergebundenen Druckluftvorrat in Verbindung stehende Vorratsanschluss 12 über das durchgeschaltete Abriss-Ventil 4 und das durchgeschaltete Parking-Ventil 6 auf den Wechselventilanschluss 40 durchgeschaltet wird. Dadurch werden die Federspeicherbremszylinder belüftet und damit die Federspeicherbremsen gelöst.

Allgemein werden daher durch eine Ventilanordnung zur Steuerung einer wenigstens einen Federspeicherbremszylinder sowie wenigstens einen Betriebsbremszylinder beinhaltenden Bremsanlage eines Anhängerfahrzeugs einer Zugfahrzeug-Anhängerkombination wenigstens die folgenden Funktionen ausgeführt:
a) Eine erste Funktion (Abriss-Funktion), gemäß welcher im Falle einer unterbrochenen oder gestörten Druckluftverbindung zwischen dem Zugfahrzeug und dem Anhängerfahrzeug Letzteres eingebremst wird,
b) eine zweite Funktion (Shunting-Funktion), gemäß welcher bei einer unterbrochenen Druckluftverbindung zwischen dem Zugfahrzeug und dem Anhängerfahrzeug die Federspeicherbremse abhängig von einem externen Signal mittels des Vorratsdrucks eines anhängerfahrzeugseitigen Druckluftvorrats gelöst wird,
c) eine dritte Funktion (Parking-Funktion), gemäß welcher bei angekuppeltem Anhängerfahrzeug die Federspeicherbremse abhängig von einem weiteren externen Signal zugespannt wird,
d) eine vierte Funktion, gemäß welcher entweder ein von einer Steuerventileinrichtung für die Betriebsbremse ausgesteuerter Betriebsbremsdruck oder ein Vorratsdruck zur Federspeicherbremse durchgesteuert wird, um diese zu lösen oder gelöst zu halten.

Der Erfindung liegt demgegenüber die Aufgabe zugrunde, eine Ventilanordnung der eingangs erwähnten Art derart weiter zu bilden, dass die oben aufgeführten Funktionen mit möglichst geringem Aufwand bzw. unter Verwendung möglichst weniger Ventile oder Bauelemente ausgeführt werden, um eine kostengünstigere und einfacher aufgebaute Ventilanordnung zu erhalten.

Erfindungsgemäß wird diese Aufgabe durch die Merkmale des Patentanspruchs 1 gelöst.

### Offenbarung der Erfindung

Erfindungsgemäß beinhaltet die Ventilanordnung ein 3/2-Wegeventil, welches abhängig von dem an seinem Steuereingang anstehenden Steuerdruck entweder seinen mit einem Ausgang einer Steuerventileinrichtung zur Erzeugung von Betriebsbremsdruck für den wenigstens einen Betriebsbremszylinder verbundenen Anschluss oder seinen mit einem anhängerfahrzeugseitigen Druckluftvorrat verbundenen Anschluss mit seinem weiteren Anschluss verbindet, der mit dem wenigstens einen Federspeicherbremszylinder verbunden ist.

Dadurch werden die Abriss-Funktion des Abriss-Ventils sowie die Funktion des Wechselventils des eingangs ausführüch beschriebenen Stands der Technik in der zweiten Ventileinrichtung integriert, welche vorzugsweise durch ein einziges 3/2-Wegeventil gebildet wird. Dadurch können die genannten beiden Funktionen anstatt durch zwei Ventile durch lediglich ein einziges Ventil ausgeführt werden, was in einer kostengünstigeren und einfacher aufgebauten Ventilanordnung resultiert.

Beim eingangs beschriebenen Stand der Technik wird Vorratsdruck aus dem anhängerfahrzeugseitigen Druckluftvorrat nur für die Shunting-Funktion (oben Funktion a) genannt), jedoch ansonsten die Druckluft zum Lösen bzw. Gelösthalten der Federspeicherbremse von dem Kupplungskopf "Vorrat" verwendet und dafür ein relativ großes Luftvolumen benötigt. Deshalb müssen die vom Kupplungskopf "Vorrat" bis zu den Federspeicherbremszylindern führenden, relativ langen Druckluftleitungen groß dimensioniert werden.

Wenn hingegen, wie bei der Erfindung, die Druckluft aus dem anhängerfahrzeugseitigen Druckluftvorrat außer für die Shunting-Funktion auch zum sonstigen Lösen bzw. Gelösthalten der Federspeicherbremse herangezogen und dieser Druckluftvorrat zentral angeordnet wird, können groß dimensionierte Druckluftleitungen kürzer ausfallen. Weil zur Ansteuerung der zweiten Steuerventileinrichtung mit Steuerdruckluft eine relativ geringe Luftmenge ausreicht, können die die Steuerdruckluft vom Kupplungskopf "Vorrat" zur zweiten Ventileinrichtung führenden Druckluftleitungen relativ klein dimensioniert werden. Diese Maßnahmen tragen deshalb in vorteilhafter Weise auch zu einer Kostenreduzierung der Ventilanordnung bei.

Durch die in den Unteransprüchen aufgeführten Maßnahmen sind vorteilhafte Weiterbildungen und Verbesserungen der im unabhängigen Anspruch angegebenen Erfindung möglich.

Genaueres geht aus der folgenden Beschreibung eines Ausführungsbeispiels hervor.

### Zeichnungen

Ein Ausführungsbeispiel der Erfindung ist in der Zeichnung dargestellt und in der nachfolgenden Beschreibung näher erläutert. In der Zeichnung zeigt
- Fig.3: einen schematischen Schaltplan einer Ventilanordnung gemäß einer bevorzugten Ausführungsform der Erfindung in einer ersten Schaltstellung;
- Fig.4: einen schematischen Schaltplan der Ventilanordnung von Fig.3 in einer zweiten Schaltstellung.

### Beschreibung des Ausführungsbeispiels

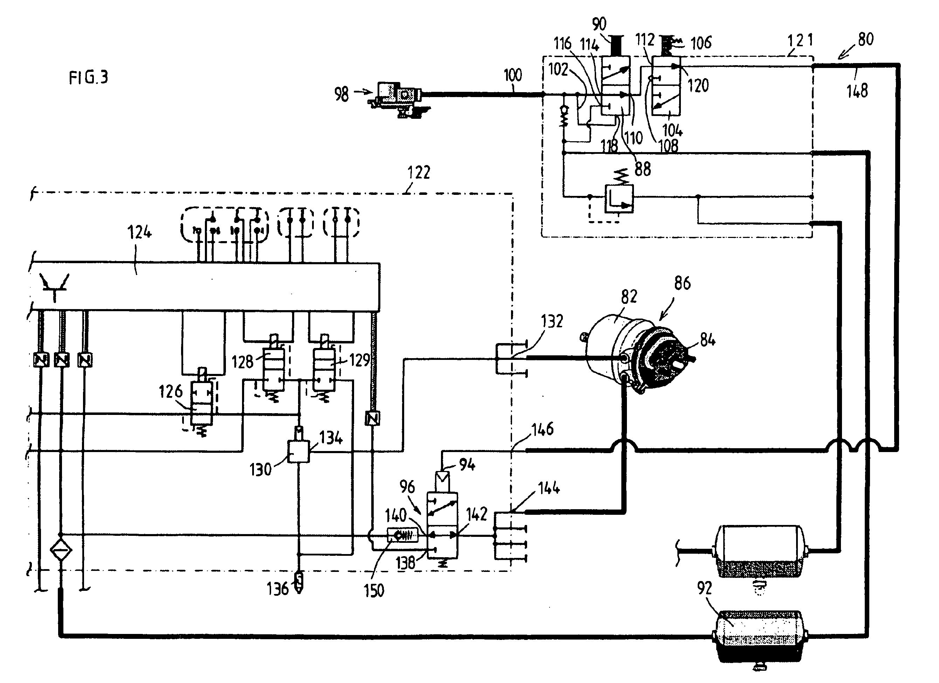

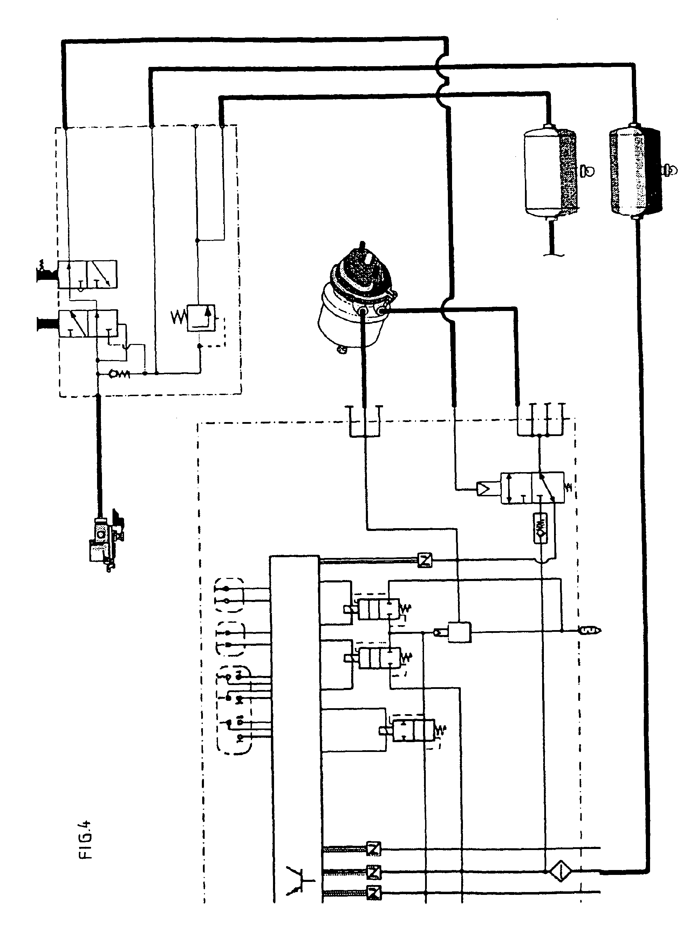

Bei dem in Fig.3 und Fig.4 gezeigten bevorzugten Ausführungsbeispiel einer erfindungsgemäßen Ventilanordnung 80 zur Steuerung einer wenigstens einen Federspeicherbremszylinder 82 sowie wenigstens einen Betriebsbremszylinder 84 beinhaltenden Bremsanlage eines Anhängerfahrzeugs einer Zugfahrzeug-Anhängerkombination wird ein Kombizylinder 86 als Bremszylinder verwendet, welcher einerseits den Betriebsbremszylinder 84 als aktive Betriebsbremse beinhaltet, welcher zum Bremszuspannen belüftet und zum Bremslösen entlüftet wird, und andererseits den Federspeicherbremszylinder 82 mit Speicherfeder als passive Parkbremse, welcher zum Bremszuspannen entlüftet und zum Bremslösen belüftet wird. Dabei sind der Betriebsbremszylinder 84 und der Federspeicherbremszylinder 82 hintereinander in Reihe angeordnet. Der Aufbau eines solchen Kombizylinders 86 ist hinlänglich bekannt, beispielsweise aus der DE 29 23 359 C2. Deshalb soll hier nicht weiter darauf eingegangen werden. Zur Vereinfachung steht der Kombizylinder 86 in Fig.3 und Fig.4 stellvertretend für mehrere Kombizylinder des Anhängerfahrzeugs.

Die Ventilanordnung 80 beinhaltet eine erste Ventileinrichtung als Shunting-Ventil 88, beispielsweise in Form eines 312-Wegeventils, welche bei Betätigung durch ein erstes externes Signal, beispielsweise durch einen mechanischen Schalter 90, den Vorratsdruck eines anhängerfahrzeugseitigen Druckluftvorrats 92 an einen Steuereingang 94 einer zweiten Ventileinrichtung 96 durchsteuert und andernfalls diesen Steuereingang 94 mit einem Kupplungskopf "Vorrat" 98 des Anhängerfahrzeugs verbindet. Steuerseitig wird das Shunting-Ventil 88 beispielsweise einerseits durch den Schalter 90 handbetätigt und andererseits durch den über eine von einer mit einem Kupplungskopf "Vorrat" 98 in Verbindung stehenden Vorratsdruckleitung 100 abgezweigten Steuerleitung 102 geleiteten, vom Zugfahrzeug herangeführten Vorratsdruck.

Weiterhin beinhaltet die Ventilanordnung 80 eine dritte Ventileinrichtung 104 als Parking-Ventil, beispielsweise in Form eines 3/2-Wegeventils, welches bei Betätigung durch ein drittes externes Signal, beispielsweise ebenfalls durch einen mechanischen Schalter 106 den Steuereingang 94 der zweiten Ventileinrichtung 96 mit einer Entlüftung 108 und andernfalls diesen Steuereingang 94 mit dem Kupplungskopf "Vorrat" 98 des Anhängerfahrzeugs verbindet.

Das Shunting-Ventil 88 und das Parking-Ventil 104 sind bevorzugt in Reihe hintereinander geschaltet, wobei ein Ausgang 110 des Shunting-Ventils 88 mit einem Eingang 112 des Parking-Ventils 104 verbunden ist. Bei durchgeschaltetem Parking-Ventil 104 kann der am Ausgang 110 des Shunting-Ventils 88 anstehende Druck, also entweder der vom Kupplungskopf Vorrat" 98 herangeführte, vom Zugfahrzeug stammende Vorratsdruck oder der vom anhängerfahrzeugseitigen Druckluftvorrat 92 herangeführte Vorratsdruck durch das durchgeschaltete Parking-Ventil 104 hindurchgeleitet werden, um den Steuereingang 94 der zweiten Ventileinrichtung 96 zu beaufschlagen.

Das Shunting-Ventil 88 wird in eine erste Schaltstellung, in welcher ein mit dem Kupplungskopf "Vorrat" 98 des Anhängerfahrzeugs in Verbindung stehender Eingang 114 gesperrt und ein mit dem anhängerfahrzeugseitigen Druckluftvorrat 92 in Verbindung stehender Eingang 116 mit dem Ausgang 110 in Verbindung steht, durch eine Betätigung des Schalters 90 geschaltet, der wiederum einen Ventilkörper des Shunting-Ventils 88 betätigt. Andererseits wird das Shunting-Ventil 88 in eine zweite Schaltstellung, in welcher der mit dem Kupplungskopf "Vorrat" 98 in Verbindung stehende Eingang 114 auf den Ausgang 110 durchgeschaltet ist, durch den an einem Steuereingang 118 anstehenden, vom Kupplungskopf "Vorrat" 98 über die Steuerleitung 102 herangeführten Vorratsdruck pneumatisch geschaltet bzw. in dieser Stellung gehalten.

Ebenso wird das Parking-Ventil 104 in eine erste Schaltstellung, in welcher ein mit dem Steuereingang 94 der zweiten Ventileinrichtung 96 in Verbindung stehender Ausgang 120 mit der Entlüftung 108 verbunden ist, durch den zugeordneten Schalter 106 geschaltet, der wiederum einen Ventilkörper des Parking-Ventils 104 betätigt. Das Parking-Ventil 104 ist beispielsweise als Rast- oder Feststellventil ausgebildet, derart, dass es sich in seiner jeweils eingestellten Schaltstellung feststellt und erst durch eine entsprechende Betätigung des Schalters 106 umgeschaltet werden kann, beispielsweise in eine zweite Schaltstellung, in welcher der mit dem Steuereingang 94 der zweiten Ventileinrichtung 96 in Verbindung stehende Ausgang 120 mit dem Eingang 112 in Verbindung steht, welcher direkt mit dem Ausgang 110 der ersten Ventileinrichtung (Shunting-Ventil) 88 verbunden ist.

Das Shunting-Ventil 88 und das Parking-Ventil 104 sind bevorzugt in eine Baueinheit 121 integriert, beispielsweise durch Unterbringung der beiden 3/2-Wegeventile 88, 104 in einem gemeinsamen, von außen her gut zugängigen Gehäuse, damit die Schalter 90 bzw. 106 durch eine Bedienperson betätigt werden können. Über entsprechende Anschlüsse und Druckluftleitungen steht diese Baueinheit 121 mit dem Druckluftvorrat 92, der zweiten Ventileinrichtung 96 sowie mit dem Kupplungskopf "Vorrat" 98 in Verbindung. Die Baueinheit 121 beinhaltet weiterhin bevorzugt ein Durchlassventil, dessen Funktion mit einer Luftfederung und deshalb nicht in Zusammenhang mit der Erfindung steht und welches deshalb hier nicht weiter erläutert wird.

Die zweite, vorzugsweise ebenfalls als 3/2-Wegeventil ausgebildete Ventileinrichtung 96 steuert abhängig von dem an seinem Steuereingang 94 anstehenden Steuerdruck entweder einen von einer Steuerventileinrichtung 122 für die Betriebsbremse ausgesteuerten Betriebsbremsdruck oder den Vorratsdruck des anhängerfahrzeugseitigen Druckluftvorrats 92 an den Federspeicherbremszylinder 82 aus. Genauer wird bei der zweiten Ventileinrichtung 96 bei Anstehen eines einen Grenzdruck überschreitenden Steuerdrucks an seinem Steuereingang 94 der Vorratsdruck des anhängerfahrzeugseitigen Druckluftvorrats 92 und andernfalls federbetätigt der von der Steuerventileinrichtung 122 für die Betriebsbremse bzw. den Betriebsbremszylinder 84 ausgesteuerte Betriebsbremsdruck an den wenigstens einen Federspeicherbremszylinder 82 ausgesteuert.

Die Steuerventileinrichtung 122 für die Betriebsbremse wird durch ein elektropneumatisches Druckregelmodul gebildet, welche den Betriebsbremsdruck abhängig von einem durch den Fahrer des Zugfahrzeugs ausgelösten und über einen Datenbus in das Anhängerfahrzeug gesteuerten Betriebsbremsanforderungssignal erzeugt. Das Druckregelmodul 122 beinhaltet in bekannter Weise eine es steuernde elektronische Steuereinrichtung 124, ein Backup-Ventil 126, ein Einlassventil 128 sowie ein Auslassventil 129. Diese Ventile 126, 128 und 129 steuern wiederum ein Relaisventil 130 an, das abhängig von einem an seinem Steuereingang 94 anstehenden Steuerdruck einen Betriebsbremsdruck an seinen mit einem Betriebsbremsanschluss 132 für den Betriebsbremszylinder 84 in Verbindung stehenden Ausgang 134 aussteuert bzw. diesen Betriebsbremsanschluss 132 mit einem Entlüftungsanschluss 136 verbindet. Weiterhin ist der Ausgang 134 des Relaisventils 130 an einen Eingang 138 des 3/2-Wegeventils 96 angeschlossen, das die zweite Ventileinrichtung bildet. Der andere Eingang 140 der zweiten Ventileinrichtung 96 steht mit dem Druckluftvorrat 92 des Anhängerfahrzeugs in Verbindung und deren Ausgang 142 mit einem Federspeicheranschluss 144 für den Federspeicherbremszylinder 82 des Kombizylinders 86. Über einen Steueranschluss 146 ist eine vom Ausgang 120 des Parking-Ventils 104 herangeführte Steuerdruckleitung 148 mit dem Steuereingang 94 der zweiten Ventileinrichtung 96 verbunden.

Die zweite Ventileinrichtung 96 ist bevorzugt in das Druckregelmodul 122 integriert, beispielsweise durch Unterbringung des 3/2-Wegeventils 96 in einem gemeinsamen Gehäuse mit den weiteren Ventilen 126, 128, 129, 130 und der elektronischen Steuereinrichtung 124, und steht über entsprechende Anschlüsse, z.B. 132, 144, 146 und Druckluftleitungen 148 mit dem anhängerseitigen Druckluftvorrat 92, dem Federspeicherbremszylinder 82, dem Betriebsbremszylinder 84 sowie mit dem Parking-Ventil 104 in Verbindung. Nicht zuletzt ist der zweiten Ventileinrichtung 96 und dem anhängerseitigen Druckluftvorrat 92 ein Rückschlagventil 150 zwischengeordnet ist.

Vor diesem Hintergrund ist die Funktionsweise der Ventilanordnung 80 wie folgt: Im ungestörten Betrieb, d.h. bei fahrender Zugfahrzeug-Anhängerkombination befinden sich die erste, die zweite und die dritte Ventileinrichtung 88, 96, 104 in den in Fig.3 gezeigten Durchschaltstellungen, in welchen der am Kupplungskopf "Vorrat" 98 anstehende, vom Zugfahrzeug herangeführte Vorratsdruck durch die erste und dritte Ventileinrichtung 88, 104 hindurch bis zum Steuereingang 94 der zweiten Ventileinrichtung 96 gesteuert wird, um den Federspeicherbremszylinder 82 belüftet und die Federspeicherbremse entsprechend gelöst zu halten. Dabei hält der Vorratsdruck in der Steuerleitung 102 das Shunting-Ventil 88 in seiner zweiten Schaltstellung. Das Shunting-Ventil 88 ist derart ausgebildet, dass es gegen den einen bestimmten Grenzwert übersteigenden, an seinem Steuereingang 118 anstehenden Steuerdruck nicht durch den Schalter 90 in die erste Schaltstellung geschaltet werden kann.

Durch den am Steuereingang 94 der zweiten Ventileinrichtung 96 anstehenden Steuerdruck, welcher größer ist als ein vorgegebener Druckgrenzwert, wird diese gegen die Federkraft der Ventilfeder in einer Schaltstellung gehalten, in welcher ihr mit dem anhängerfahrzeugseitigen Druckluftvorrat 92 in Verbindung stehender Eingang 140 mit dem Federspeicheranschluss 144 und damit mit dem Federspeicherbremszylinder 82 in Verbindung steht. Dann sorgt die aus dem anhängerfahrzeugseitigen Druckluftvorrat 92 in den Federspeicherbremszylinder 82 eingesteuerte Druckluft dafür, dass der Federspeicherkolben gegen die Kraft der Speicherfeder in eine zurückgezogene Position gedrängt und die Federspeicherbremse dadurch gelöst bleibt. Die Betriebsbremse kann dagegen weiterhin unabhängig von der Federspeicherbremse durch das Druckregelmodul 122 betätigt werden, um die gekuppelte Zugfahrzeug-Anhängerkombination einzubremsen.

Nachdem die Zugfahrzeug-Anhängerkombination zum Abstellen mit der aktiven Betriebsbremse abgebremst worden ist, kann die Parkbremse bei noch an das Zugfahrzeug angekuppeltem Anhänger zugespannt werden ("Parking-Funktion"). Dazu betätigt der Fahrzeugführer den Schalter 106 des Parking-Ventils 104 und führt es dadurch von der in Fig.3 gezeigten zweiten Schaltstellung in die erste Schaltstellung über, in welcher es über die Steuerdruckleitung 148 den Steuereingang 94 der zweiten Ventileinrichtung 96 mit seiner Entlüftung 108 verbindet, während sein Eingang 112 abgesperrt wird. Der abgesperrte Eingang 112 des Parking-Ventils 104 verhindert, dass der am Kupplungskopf "Vorrat" 98 noch anstehende Vorratsdruck ausströmen kann. Somit strömt Druckluft aus der Steuerdruckleitung 148 ins Freie, wodurch der Druck am Steuereingang 94 der zweiten Ventileinrichtung 96 unter den Grenzwert sinkt und dieses daher federbetätigt von der Stellung gemäß Fig.3 in die Stellung von Fig.4 umschaltet, in welcher sein mit dem Federspeicheranschluss 144 verbundener Ausgang 142 mit seinem Eingang 138 und damit mit dem Ausgang 134 des Relaisventils 130 in Verbindung gebracht wird, welcher den Betriebsbremsdruck führt.

Falls der Fahrer nun die Betriebsbremse nicht mehr oder nur mit so einer geringen Bremsanforderung betätigt, so dass der Betriebsbremsdruck unter dem Lösedruck der Federspeicherbremse liegt, so führt der niedrige Betriebsbremsdruck im Federspeicherbremszylinder 82 zu einem Zuspannen der Federspeicherbremse.

Falls der Fahrer jedoch die Betriebsbremse auch im abgestellten Zustand mit einem über dem Lösedruck der Federspeicherbremse liegenden Betriebsbremsdruck betätigt, so bleibt die Federspeicherbremse gelöst und die mit Betriebsbremsdruck zugespannte Betriebsbremse hält die Zugfahrzeug-Anhängerkombination eingebremst.

Ist der Betriebsbremsdruck geringfügig niedriger als der Lösedruck der Federspeicherbremse aber höher als der Zuspanndruck der Betriebsbremse, können sowohl die Federspeicherbremse als auch die Betriebsbremse zuspannen und die Gesamtbremskraft setzt sich aus der Bremskraft der Betriebsbremse und der Bremskraft der Federspeicherbremse zusammen, womit wiederum die Zugfahrzeug-Anhängerkombination im eingebremsten Zustand gehalten wird. Nach dem durch den Fahrer initiierten Lösen der Betriebsbremse, spannt die Federspeicherbremse, wie oben beschrieben, mit maximaler Federspeicherbremskraft zu.

Wird hingegen der durch die Betriebsbremse in den Stillstand eingebremste Anhänger ohne vorherige Schalterbetätigung des Parking-Ventils 104 vom Zugfahrzeug abgekuppelt, sinkt der Druck am Kupplungskopf "Vorrat" 98 rapide ab. Auf die Schaltstellungen des Shunting-Ventils 88 bzw. des Parking-Ventils 104 hat dieser Druckabfall keinen Einfluss, zum einen, weil das Shunting-Ventil 88 zum Umschalten gegen den nun nicht mehr vorhandenen Steuerdruck in der Steuerleitung 102 und am Steuereingang 118 erst über den Schalter 90 betätigt werden müsste, zum andern, weil das Parking-Ventil 104 in seiner Durchlassstellung mechanisch festgestellt ist. Deshalb sinkt wegen der durchgeschalteten Ventile 88 bzw. 104 auch der Steuerdruck am Steuereingang 94 der zweiten Ventileinrichtung 96 ab. Demzufolge schaltet diese federbetätigt von der in Fig.3 gezeigten Schaltstellung in die Schaltstellung gemäß Fig.4 um, in welcher sein mit dem Federspeicheranschluss 144 verbundener Ausgang 142 mit seinem Eingang 138 und damit mit dem Ausgang 134 des Relaisventils 130 in Verbindung gebracht wird, welcher den Betriebsbremsdruck führt. Da jedoch das Anhängerfahrzeug von Zugfahrzeug abgekuppelt ist, ist dieser Bremsdruck so niedrig, dass er unter dem Lösedruck der Federspeicherbremse liegt, so dass die Federspeicherbremse zuspannt und das Anhängerfahrzeug eingebremst hält.

Das oben beschriebene Zuspannen der Federspeicherbremse bei nicht mehr mit ausreichendem Druck versorgtem Kupplungskopf "Vorrat" 98 tritt auch dann ein, wenn es zu einem Abriss der Schlauchverbindung oder zu einem Leck in der Schlauchverbindung zwischen dem Kupplungskopf "Vorrat" des Zugfahrzeugs und dem Kupplungskopf "Vorrat" 98 des Anhängerfahrzeugs kommt, weil dann auch der Druck am Kupplungskopf "Vorrat" 98 des Anhängerfahrzeugs rapide sinkt ("Abriss-Funktion"). Damit wird die vom Gesetzgeber geforderte automatische Einbremsung des Anhängers bei einem Schlauchabriss oder einer Leckage erfüllt.

Wenn es wünschenswert ist, den abgestellten und über die Federspeicherbremsen eingebremsten Anhänger durch ein Fahrzeug ohne Druckluftversorgung, beispielsweise durch einen Gabelstapler zu verfahren bzw. zu rangieren (Shunting-Funktion), muss die Federspeicherbremse gelöst werden. Dazu betätigt eine Bedienperson den Schalter 90 des Shunting-Ventils 88 gegen den wegen des offenen Kupplungskopfes "Vorrat" 98 nun niedrigen Steuerdruck, wodurch es in seine erste Schaltstellung umgeschaltet wird und Druckluft vom anhängerseitigen Druckluftvorrat 92 über seinen Eingang 116, seinen Ausgang 110 und das durchgeschaltete Parking-Ventil 104 auf den Steuereingang 94 der zweiten Ventileinrichtung 96 durchgeschaltet wird, welches daraufhin wieder die in Fig.3 gezeigte Schaltstellung einnimmt, in welcher Druckluft des anhängerfahrzeugseitigen Druckluftvorrats 92 den Federspeicherbremszylinder 82 belüftet und die Federspeicherbremse löst.

Selbstverständlich müssen nicht zwangsläufig der Vorratsdruck des anhängerfahrzeugseitigen Druckluftvorrats 92 oder der vom Druckregelmodul 122 erzeugte Betriebsbremsdruck in ihrer ursprünglichen Größe bzw. in ihrem ursprünglichen Wert dazu dienen, die oben beschriebenen Funktionen auszuführen, vielmehr können auch von diesen abgeleitete, hinsichtlich des ursprünglichen Druckwerts veränderte Drücke verwendet werden.

Gemäß der besonders bevorzugten Ausführungsform beinhaltet die Ventilanordnung 80 gemäß der Erfindung daher wenigstens folgendes:
a) Eine erste Ventileinrichtung 88, welche abhängig von einem ersten externen Signal den Vorratsdruck eines anhängerfahrzeugseitigen Druckluftvorrats 92 oder einen von diesem abgeleiteten Druck an einen Steuereingang 94 einer zweiten Ventileinrichtung 96 durchsteuert oder diesen Steuereingang 94 mit einem Kupplungskopf "Vorrat" 98 des Anhängerfahrzeugs verbindet,
b) eine dritte Ventileinrichtung 104, welche abhängig von einem dritten externen Signal den Steuereingang 94 der zweiten Ventileinrichtung 96 mit einer Entlüftung 108 oder diesen Steuereingang 94 mit dem Kupplungskopf "Vorrat" 98 des Anhängerfahrzeugs verbindet, wobei
c) die zweite Ventileinrichtung 96 abhängig von dem an seinem Steuereingang 94 anstehenden Steuerdruck entweder einen von einer Steuerventileinrichtung 122 für den wenigstens einen Betriebsbremszylinder 84 ausgesteuerten Betriebsbremsdruck oder einen von diesem abgeleiteten Druck oder den Vorratsdruck des anhängerfahrzeugseitigen Druckluftvorrats 92 oder einen von diesem abgeleiteten Druck an den wenigstens einen Federspeicherbremszylinder 82 aussteuert.

### Bezugszahlenliste

- 1: Park- / Shunt - Ventilanordnung
- 2: Shunt-Ventil
- 4: Abriss-Ventil
- 6: Park-Ventil
- 8: Kupplungs-Anschluss
- 10: Eingang
- 12: Vorratsanschluss
- 14: Eingang
- 16: Ausgang
- 18: Schalter
- 20: Steuereingang
- 22: Steuerleitung
- 24: Steuerleitung
- 26: Steuereingang
- 28: Eingang
- 30: Ausgang
- 32: Ausgang
- 34: Entlüftungsanschluss
- 36: Eingang
- 38: Schalter
- 40: Wechselventilanschluss
- 42: Ausgang
- 44: Ausgang
- 46: Rückschlagventil
- 48: Rückschlagventil
- 50: Druckregelmodul
- 52: elektrische Steuereinrichtung
- 54: Backup-Ventil
- 56: Einlassventil
- 58: Auslassventil
- 60: Relaisventil
- 62: Steuereingang
- 64: Betriebsbrems-Anschlüsse
- 66: Ausgang
- 68: Entlüftungsanschluss
- 70: Eingang
- 72: Wechselventil
- 74: Eingang
- 77: Ausgang
- 78: Federspeicheranschlüsse
- 80: Ventilanordnung
- 82: Federspeicherbremszylinder
- 84: Betriebsbremszylinder
- 86: Kombizylinder
- 88: erste Ventileinrichtung
- 90: Schalter
- 92: Druckluftvorrat
- 94: Steuereingang
- 96: zweite Ventileinrichtung
- 98: Kupplungskopf
- 100: Vorratsdruckleitung
- 102: Steuerleitung
- 104: dritte Ventileinrichtung
- 106: Schalter
- 108: Entlüftung
- 110: Ausgang
- 112: Eingang
- 114: Eingang
- 116: Eingang
- 118: Steuereingang
- 120: Ausgang
- 121: Baueinheit
- 122: Steuerventileinrichtung
- 124: elektronische Steuereinrichtung
- 126: Backupventil
- 128: Einlassventil
- 129: Auslassventil
- 130: Relaisventil
- 132: Betriebsbremsanschluss
- 134: Ausgang
- 136: Entlüftungsanschluss
- 138: Eingang
- 140: Eingang
- 142: Ausgang
- 144: Federspeicheranschluss
- 146: Steueranschluss
- 148: Steuerdruckleitung
- 150: Rückschlagventil

## Patentansprüche

1. Ventilanordnung (80) zur Steuerung einer wenigstens einen Federspeicherbremszylinder (82) sowie wenigstens einen Betriebsbremszylinder (84) beinhaltenden Bremsanlage eines Anhängerfahrzeugs einer Zugfahrzeug-Anhängerkombination, **dadurch gekennzeichnet, dass** sie ein 312-Wegeventil (96) beinhaltet, welches abhängig von dem an seinem Steuereingang (94) anstehenden Steuerdruck entweder seinen mit einem Ausgang (134) einer Steuerventileinrichtung (122) zur Erzeugung von Betriebsbremsdruck für den wenigstens einen Betriebsbremszylinder (84) verbundenen Anschluss (138) oder seinen mit einem anhängerfahrzeugseitigen Druckluftvorrat (92) verbundenen Anschluss (140) mit seinem weiteren Anschluss (142) verbindet, der mit dem wenigstens einen Federspeicherbremszylinder (82) verbunden ist.

2. Ventilanordnung nach Anspruch 1, **dadurch gekennzeichnet, dass** eine Ventileinrichtung (88) vorgesehen ist, welche abhängig von einem externen Signal den Vorratsdruck des anhängerfahrzeugseitigen Druckluftvorrats (92) oder einen von diesem abgeleiteten Druck an den Steuereingang (94) des 3/2-Wegeventils (96) durchsteuert oder diesen Steuereingang (94) mit einem Kupplungskopf "Vorrat" (98) des Anhängerfahrzeugs verbindet.

3. Ventilanordnung nach Anspruch 2, **dadurch gekennzeichnet, dass** die Ventileinrichtung (88) durch ein weiteres 3/2-Wegeventil gebildet wird, welches in eine erste Schaltstellung, in welcher ein mit dem Kupplungskopf "Vorrat" (98) des Anhängerfahrzeugs in Verbindung stehender Eingang (114) gesperrt und ein mit dem anhängerfahrzeugseitigen Druckluftvorrat (92) in Verbindung stehender Eingang (116) mit einem Ausgang (110) in Verbindung steht, durch das externe Signal schaltbar ist, und welches in eine zweite Schaltstellung, in welcher der mit dem Kupplungskopf "Vorrat" (98) in Verbindung stehende Eingang (114) auf den Ausgang (110) durchgeschaltet ist, durch den an einem Steuereingang (118) anstehenden, vom Kupplungskopf "Vorrat" (98) herangeführten Vorratsdruck oder einen von diesem abgeleiteten Druck pneumatisch schaltbar ist.

4. Ventilanordnung nach Anspruch 2 oder 3, **dadurch gekennzeichnet, dass** das externe Signal durch einen Schalter (90) ausgelöst wird.

5. Ventilanordnung nach einem der vorhergehenden Ansprüche, **dadurch gekennzeichnet, dass** eine weitere Ventileinrichtung (104) vorgesehen ist, welche abhängig von einem weiteren externen Signal den Steuereingang (94) des 3/2-Wegeventils (96) mit einer Entlüftung (108) oder diesen Steuereingang (94) mit dem Kupplungskopf "Vorrat" (98) des Anhängerfahrzeugs verbindet.

6. Ventilanordnung nach Anspruch 5, **dadurch gekennzeichnet, dass** die weitere Ventileinrichtung (104) durch ein weiteres 3/2-Wegeventil gebildet wird, welches in eine erste Schaltstellung, in welcher ein mit dem Steuereingang (94) des 3/2-Wegeventils (96) in Verbindung stehender Ausgang (120) mit einer Entlüftung (108) verbunden ist, und welches in eine zweite Schaltstellung, in welcher der mit dem Steuereingang (94) des 3/2-Wegeventils in Verbindung stehende Ausgang (120) mit einem Eingang (112) in Verbindung steht, welcher direkt mit dem Ausgang (110) der Ventileinrichtung (88) verbunden ist, durch das weitere externe Signal schaltbar ist.

7. Ventilanordnung nach Anspruch 5 oder 6, **dadurch gekennzeichnet, dass** das weitere externe Signal durch einen Schalter (106) ausgelöst wird.

8. Ventilanordnung nach einem der vorhergehenden Ansprüche, **dadurch gekennzeichnet, dass** das 3/2-Wegeventil (96) bei Anstehen eines einen Grenzdruck überschreitenden Steuerdrucks an seinem Steuereingang (94) den Vorratsdruck des anhängerfahrzeugseitigen Druckluftvorrats (92) oder einen von diesem abgeleiteten Druck und andernfalls federbetätigt den von der Steuerventileinrichtung (122) für den wenigstens einen Betriebsbremszylinder (84) ausgesteuerten Betriebsbremsdruck oder einen von diesem abgeleiteten Druck an den wenigstens einen Federspeicherbremszylinder (82) aussteuert.

9. Ventilanordnung nach Anspruch 8, **dadurch gekennzeichnet, dass** der Betriebsbremsdruck von einem elektro-pneumatischen Druckregelmodul erzeugt wird, welche die Steuerventileinrichtung (122) für den wenigstens einen Betriebsbremszylinder (84) bildet.

10. Ventilanordnung nach Anspruch 9, **dadurch gekennzeichnet, dass** das 3/2-Wegeventil (96) in das Druckregelmodul (122) integriert ist.

11. Ventilanordnung nach einem der vorhergehenden Ansprüche, **dadurch gekennzeichnet, dass** dem 3/2-Wegeventil (96) und dem anhängerseitigen Druckluftvorrat (92) ein Rückschlagventil (150) zwischengeordnet ist.

## Claims

1. A valve arrangement (80) for controlling a brake system, comprising at least one spring brake cylinder (82) and at least one service brake cylinder (84), of a trailer vehicle of a traction vehicle-trailer combination, **characterized in that** said valve arrangement (80) comprises a 3/2 way valve (96) which, as a function of the control pressure present at its control inlet (94), connects either its connection (138), which is connected to an outlet (134) of a control valve device (122) in order to generate service brake pressure for the at least one service brake cylinder (84), or connects its connection (140), which is connected to a trailer-vehicle-side compressed air supply (92), to its further connection (142) which is connected to the at least one spring brake cylinder (82).

2. The valve arrangement as claimed in claim 1, **characterized in that** a valve device (88) is provided which, as a function of an external signal, transmits the supply pressure of the trailer-vehicle-side compressed air supply (92) or a pressure derived therefrom to the control inlet (94) of the 3/2 way valve (96) or connects said control inlet (94) to a "supply" coupling head (98) of the trailer vehicle.

3. The valve arrangement as claimed in claim 2, **characterized in that** the valve device (88) is formed by a further 3/2 way valve which can be switched by the external signal into a first switched position, in which an inlet (114) which is connected to the "supply" coupling head (98) of the trailer vehicle is closed and an inlet (116) which is connected to the trailer-vehicle-side compressed air supply (92) is connected to an outlet (110), and which 3/2 way valve can be switched pneumatically into a second switched position in which the inlet (114) which is connected to the "supply" coupling head (98) is switched through to the outlet (110) by the supply pressure which is present at a control inlet (118) and is conducted from the "supply" coupling head (98), or by a pressure which is derived from said supply pressure.

4. The valve arrangement as claimed in claim 2 or 3, **characterized in that** the external signal is triggered by a switch (90).

5. The valve arrangement as claimed in one of the preceding claims, **characterized in that** a further valve device (104) is provided which, as a function of a further external signal, connects the control inlet (94) of the 3/2 way valve (96) to a venting means (108) or connects said control inlet (94) to the "supply" coupling head (98) of the trailer vehicle.

6. The valve arrangement as claimed in claim 5, **characterized in that** the further valve device (104) is formed by a further 3/2 way valve which can be switched by the further external signal into a first switched position, in which an outlet (120) which is connected to the control inlet (94) of the 3/2 way valve (96) is connected to a venting means (108), and which further 3/2 way valve can be switched into a second switched position, in which the outlet (120) which is connected to the control inlet (94) of the 3/2 way valve is connected to an inlet (112) which is directly connected to the outlet (110) of the valve device (88).

7. The valve arrangement as claimed in claim 5 or 6, **characterized in that** the further external signal is triggered by a switch (106).

8. The valve arrangement as claimed in one of the preceding claims, **characterized in that**, when a control pressure which exceeds a limiting pressure is present at a control inlet (94) of the 3/2 way valve (96), said 3/2 way valve (96) modulates the supply pressure of the trailer-vehicle-side compressed air supply (92) or a pressure derived from said supply pressure and otherwise spring-activates the service brake pressure which is modulated by the control valve device (122) for the at least one service brake cylinder (84), or modulates a pressure to the at least one spring brake cylinder (82), which is derived from said service brake pressure.

9. The valve arrangement as claimed in claim 8, **characterized in that** the service brake pressure is generated by an electro-pneumatic pressure regulating module which forms the control valve device (122) for the at least one service brake cylinder (84).

10. The valve arrangement as claimed in claim 9, **characterized in that** the 3/2 way valve (96) is integrated into the pressure regulating module (122).

11. The valve arrangement as claimed in one of the preceding claims, **characterized in that** a non-return valve (150) is arranged between the 3/2 way valve (96) and the trailer-side compressed air supply (92).

## Revendications

1. Ensemble de vanne (80) destiné à commander un système de freinage d'un véhicule tracté renfermant au moins un cylindre de frein à ressort (82) ainsi qu'au moins un cylindre de frein de service (84) dans une combinaison de véhicule tracteur et d'une remorque, **caractérisé en ce qu'**il comprend une vanne à 3/2 voies (96) qui, en réponse à la pression de commande appliquée à son entrée de commande (94), met son connecteur (138) relié à une sortie (134) d'un moyen de soupape de commande (122) afin d'engendre une pression de freinage de service pour ledit au moins un cylindre de frein de service (84) ou son connecteur (140) relié à un réservoir de l'air comprimée du coté du véhicule tracté en communication avec son autre connecteur (142) qui est relié audit au moins un cylindre de frein à ressort (82).

2. Ensemble de vanne selon la revendication 1, **caractérisé en ce qu'**un moyen à soupape (88) est disposé qui, en fonction d'un signal externe, passe la pression du réservoir dudit réservoir de l'air comprimée (92) du côté du véhicule tracté ou une pression d'en dérivée à l'entrée de commande (94) de ladite soupape à 3/2 voies (96) ou met cette entrée de commande (94) en communication avec une tête d'accouplement « réservoir » (98) dudit véhicule tracté.

3. Ensemble de vanne selon la revendication 2, **caractérisé en ce que** ledit moyen à soupape (88) est formé par une autre vanne à 3/2 voies qui, en une première position de commutation, à laquelle une entrée (114) en communication avec ladite tête d'accouplement « réservoir » (98) dudit véhicule tracté est bloquée et une entrée (116) en communication avec ledit réservoir de l'air comprimée (92) du côté du véhicule tracté se trouve en communication avec une sortie (110), est apte à être commutée par ledit signal externe, et qui est apte à être commandé en une deuxième position de commutation, à laquelle ladite entrée (114) en communication avec ladite tête d'accouplement « réservoir » (98) est directement passé à ladite sortie (110), de façon pneumatique par la pression de réservoir appliquée à une entrée de commande (118) et alimentée à partir de ladite tête d'accouplement « réservoir » (98) ou par une pression d'en dérivée.

4. Ensemble de vanne selon la revendication 2 ou 3, **caractérisé en ce que** ledit signal externe est déclenché par un commutateur (90).

5. Ensemble de vanne selon une quelconque des revendications précédentes, **caractérisé en ce qu'**un autre moyen à soupape (104) est disposé, qui, en fonction d'un autre signal externe, met ladite entrée de commande (94) de ladite vanne à 3/2 voies (96) en communication avec un moyen de purge de l'air (108) ou cette entrée de commande (94) avec ladite tête d'accouplement « réservoir » (98) dudit véhicule tracté.

6. Ensemble de vanne selon la revendication 5, **caractérisé en ce que** ledit autre moyen à soupape (104) est formé par une autre vanne à 3/2 voies qui, en une première position de commutation, à laquelle une sortie (120) en communication avec ladite entrée de commande (94) de ladite vanne à 3/2 voies (96) est reliée à un moyen de purge de l'air (108), et qui est commandable, par ledit autre signal externe, en une deuxième position de commutation, à laquelle ladite sortie (120) en communication avec ladite entrée de commande (94) de ladite vanne à 3/2 voies est reliée à une entrée (112) qui est directement reliée à ladite sortie (110) dudit moyen à soupape (88),

7. Ensemble de vanne selon la revendication 5 ou 6, **caractérisé en ce que** ledit autre signal externe est déclenché par un commutateur (106).

8. Ensemble de vanne selon une quelconque des revendications précédentes, **caractérisé en ce que** quand une pression de commande, qui dépasse une pression de limite, est appliquée à son entrée de commande (94), ladite vanne à 3/2 voies (96) commande la pression de réservoir dans ledit réservoir de l'air comprimée du côté du véhicule tracté ou une pression d'en dérivée et, en un cas différent, sous l'action de ressort commande la pression de freinage de service commandée par ledit moyen à soupape de commande (122) pour ledit au moins un cylindre de freinage de service (84) ou une pression d'en dérivée audit au moins un cylindre de frein à ressort (82).

9. Ensemble de vanne selon la revendication 8, **caractérisé en ce que** la pression de freinage de service est engendrée par un module régulateur de pression électropneumatique, qui constitue ledit moyen à soupape de commande (122) pour ledit au moins un cylindre de frein de service (84).

10. Ensemble de vanne selon la revendication 9, **caractérisé en ce que** ladite vanne à 3/2 voies (96) est intégrée dans ledit module régulateur de pression (122).

11. Ensemble de vanne selon une quelconque des revendications précédentes, **caractérisé en ce qu'**une soupape de retenue (150) est interposé entre ladite vanne à 3/2 voies (96) et ledit réservoir de l'air comprimée (92) du côté de la remorque.
